# EUROPÄISCHE PATENTANMELDUNG

(11) **EP 1 282 328 A1**
(43) Veröffentlichungstag der Anmeldung: **05.02.2003**
(21) Anmeldenummer: 01440241.6
(22) Anmeldetag: 27.07.2001
(51) Int. Cl.: H04Q 11/04, H04M 11/06, H04N 7/173

(54) **Verfahren zum Aufbau von Telekommunikationsverbindungen im Anschlussbereich einer Teilnehmervermittlungsstelle, Teilnehmeranschlusssystem, Teilnehmervermittlungsstelle und Vorfeldeinrichtung**

(71) Anmelder: ALCATEL, 75008 Paris (FR)
(72) Erfinder: Domschitz, Peter, 70191 Stuttgart (DE); Banniza, Thomas-Rolf, 71701 Schwieberdingen (DE)
(74) Vertreter: Brose, Gerhard

(57) **Zusammenfassung**

Die Erfindung betrifft ein Verfahren zum Aufbau von Telekommunikationsverbindungen, insbesondere von paketvermittelten Telekommunikationsverbindungen, im Anschlußbereich (SN, LM) einer Teilnehmervermittlungsstelle (ER) mit folgenden Schritten:
- Entgegennahme eines Wunsches zum Aufbau einer Telekommunikationsverbindung von oder mit einem Endteilnehmer (TE) durch die Teilnehmervermittlungsstelle (ER),
- Prüfung durch die Teilnehmervermittlungsstelle (ER), ob dieser Endteilnehmer (TE) zum Aufbau der gewünschten Telekommunikationsverbindung berechtigt ist,
- Aufbau eines verbindungsindividuellen Kanals als Teil eines mehreren Teilnehmern gemeinsamen Mediums zwischen der Teilnehmervermittlungsstelle (ER) und einer Vorfeldeinrichtung (AP, MR),
- Signalisierung des Wunsches zum Aufbau der Telekommunikationsverbindung durch die Teilnehmervermittlungsstelle (ER) an die Vorfeldeinrichtung (AP, MR),
- Entgegennahme der Signalisierung durch die Vorfeldeinrichtung (AP, MR),
- Verbinden eines teilnehmerindividuellen Pfads von der Vorfeldeinrichtung (AP, MR) zum Endteilnehmer (TE) mit dem verbindungsindividuell aufgebauten Kanal, der Teil eines mehreren Teilnehmern gemeinsamen Mediums zwischen der Teilnehmervermittlungsstelle (ER) und der Vorfeldeinrichtung (AP, MR) ist, durch die Vorfeldeinrichtung (AP, MR), und
- Aufnahme der gewünschten Telekommunikationsverbindung, sowie ein Teilnehmeranschlußsystem, eine Teilnehmervermittlungsstelle (ER), eine Vorfeldeinrichtung (AP, MR) und ein Programmodul.

## Beschreibung

Die Erfindung betrifft ein Verfahren zum Aufbau von Telekommunikationsverbindungen, insbesondere von paketvermittelten Telekommunikationsverbindungen, im Anschlußbereich einer Teilnehmervermittlungsstelle, ein Teilnehmeranschlußsystem im Anschlußbereich einer Teilnehmervermittlungsstelle, eine Teilnehmervermittlungsstelle und eine Vorfeldeinrichtung.

Herkömmliche Telekommunikationsnetze sind hierarchisch aufgebaut. Der teilnehmernächste Vermittlungsknoten, die Teilnehmervermittlungsstelle, war (und ist derzeit auch noch) gleichzeitig für die Teilnehmerverwaltung zuständig. Dort war deshalb die meiste Intelligenz im Telekommunikationsnetz angesiedelt.

Ein wesentlicher Teil der Teilnehmerverwaltung ist die Vergebührung. Diese ist aber technisch nicht zwingend und auch nicht für alle Teilnehmeranschlüsse vorgesehen; Ausnahmen sind beispielsweise Notruftelephone. Technisch zwingend dagegen ist die Überprüfung der Teilnehmerberechtigung. Öffentliche Telephone einschließlich der Notruftelephone dürfen beispielsweise in manchen Ländern nur für abgehende Rufe verwendet werden. Von Notruftelephonen dürfen andererseits in der Regel auch nur ganz bestimmte Ziele angerufen werden. Da größere Bargeldbeträge schwierig einzuziehen sind, sind öffentliche Telephone oft nur für Orts- oder Inlandsgespräche zugelassen.

Zwischenzeitlich werden auch ganz andere Arten von Telekommunikationsverbindungen, vor allem auch mit anderen Kapazitätsanforderungen, über das öffentliche Telekommunikationsnetz geführt, wobei zumindest bis zur Teilnehmerverwaltung hin noch dieselben Wege genommen werden. Hier ist die Prüfung der Teilnehmerberechtigung ein ganz wesentliches Merkmal des Verbindungsaufbaus. Die Prüfung darauf hin, ob der rufende oder gerufene Teilnehmer überhaupt technisch in der Lage ist, eine Kommunikationsverbindung der genannten Art zu führen, wird hier als Teil der Prüfung der Teilnehmerberechtigung angesehen.

Für viele neue Arten der Kommunikationsverbindungen reicht die Kapazität eines üblichen Sprachkanals mit (in Europa) 64 kbit/s nicht, teils bei weitem nicht, aus. Kommunikationsverbindungen mit deutlich höherer Kapazität können aber nicht problemlos über dieselben Entfernungen geführt werden, wie sie für Teilnehmeranschlüsse im Bereich herkömmlicher Teilnehmervermittlungsstellen bekannt sind.

Der Erfindung liegt die Aufgabe zugrunde, eine Lösung für das aufgezeigte Problem anzugeben.

Diese Aufgabe wird erfindungsgemäß gelöst durch ein Verfahren nach der Lehre des Anspruchs 1, ein Teilnehmeranschlußsystem nach der Lehre des Anspruchs 2, eine Teilnehmervermittlungsstelle nach der Lehre des Anspruchs 3 und eine Vorfeldeinrichtung nach der Lehre des Anspruchs 4.

Das Vorfeld wird damit zu einem aktiven Verteilnetz ausgebaut, in dem einfache Vermittlungsaufgaben erfolgen; die Teilnehmerverwaltung bleibt aber in der Teilnehmervermittlungsstelle und ist damit nicht mehr im teilnehmernächsten Vermittlungsknoten.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt schematisch ein Ausführungsbeispiel eines erfindungsgemäßen Teilnehmeranschlußsystems zur Durchführung des erfindungsgemäßen Verfahrens mit einer erfindungsgemäßen Teilnehmervermittlungsstelle und einigen erfindungsgemäßen Vorfeldeinrichtungen
- Figur 2: zeigt mit etwas mehr Details einen Ausschnitt aus einem weiteren Ausführungsbeispiel eines erfindungsgemäßen Teilnehmeranschlußsystems, das gegenüber dem Ausführungsbeispiel nach Figur 1 dahingehend abgewandelt ist, daß es zwei erfindungsgemäße Teilnehmervermittlungsstellen aufweist.
- Figur 3: zeigt ein weiteres Ausführungsbeispiel eines erfindungsgemäßen Teilnehmeranschlußsystems.
- Figur 4: zeigt weitere Details zu einem erfindungsgemäßen Teilnehmeranschlußsystem.

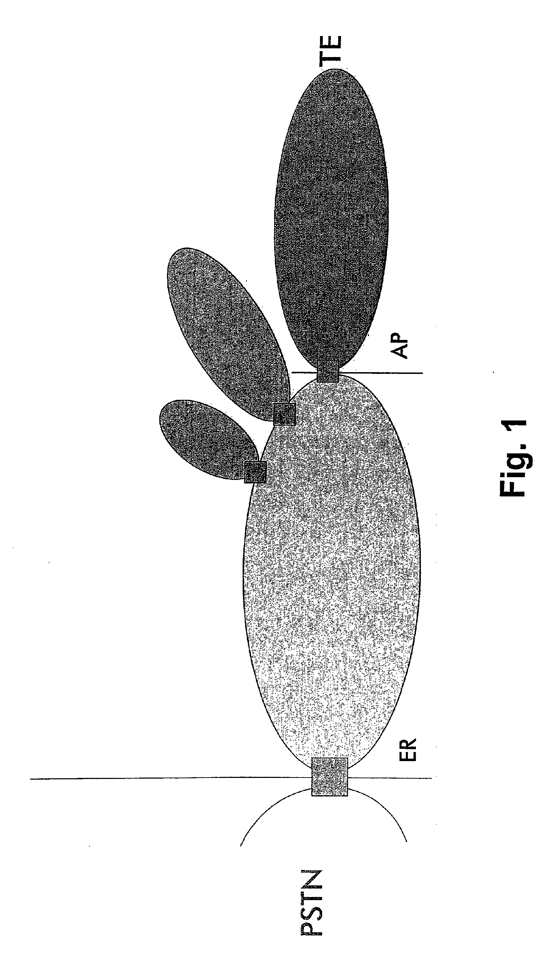

Anhand der Figur 1 wird zunächst der Grundgedanke der Erfindung erläutert. Die Figur zeigt drei durch senkrechte Linien voneinander getrennte Hierarchiebereiche eines Telekommunikationsnetzes. Ganz links ist hier der öffentliche Bereich PSTN dargestellt. PSTN (Public Switching Telephone Network) wird ganz allgemein als Bezeichnung des allgemein zugänglichen Teils des letztlich einen weltweiten Telekommunikationsnetzes verwendet. Daran schließt sich der Teilnehmeranschlußbereich an, der infolge der Erfindung wieder in zwei Hierarchiestufen aufgeteilt ist. Diese beiden Teile betreffen einen Bedienteil SN und einen Zugangsteil LM. Am Zugangsteil LM ist hier ein einzelner Endteilnehmer TE stellvertretend für viele dargestellt. Zwischen den Bereichen ist einerseits eine Teilnehmervermittlungsstelle ER und andererseits eine Vorfeldeinrichtung AP eingezeichnet. Am Rand des Bedienteils SN sind weitere Vorfeldeinrichtungen mit weiteren Zugangsteilen LM angedeutet.

Es werden hier Begriffe verwendet, die teils (Teilnehmervermittlungsstelle, Vorfeldeinrichtung) aus der herkömmlichen Vermittlungstechnik herrühren und von dorther möglicherweise auch mit anderen Inhalten belegt sind, teils (Bedienteil, Zugangsteil) an sich nichtssagende Begriffe, wo noch kein feststehender Sprachgebrauch vorliegt. Die Abkürzungen ER, SN, AP und LM gehen auf Arbeitstitel zurück. Die Teilnehmervermittlungsstelle ER wird intern als "Edge Router", die Vorfeldeinrichtung AP als "Access Point" bezeichnet. Der Bedienteil SN wird entsprechend als "Serving Network", der Zugangsteil LM als "Last Meter access" bezeichnet.

Diese internen Bezeichnungen spiegeln durchaus die Erfindung in gewisser Weise wieder. Im Hinblick auf neuere Technologien, bei denen die Paketvermittlung einen gewichtigen Anteil spielt, wird der traditionelle Ausdruck Vermittlung (switching) eher durch den Ausdruck "Routing" ersetzt. Der Abschluß ("Edge") des öffentlichen Netzes PSTN und der Abschluß ("Access") des teilnehmerindividuellen Bereichs fällt hier erfindungsgemäß nicht mehr zusammen; dazwischen liegt ein weiterer Netzteil SN, der beiden Seiten als Verlängerung dient. Aus dem zwischenzeitlich bekannten "Last-Mile"-Bereich ist nun technologiebedingt ein "Last-Meter"-Bereich geworden, der typischerweise die letzten 300 m umfaßt.

Im Zugangsteil sind nach wie vor, unter anderem aus Datenschutzgründen, von vorn herein teilnehmerindividuelle Wege erforderlich, wenngleich diese gegenüber traditionellen Wegen durchaus in ihrer Kapazität variieren können.

Schon wegen der variablen Kapazitäten im Zugangsteil, erst recht wegen der variablen Kapazitäten in mehreren Zugangsteilen, können im Zwischenbereich, hier dem Bedienteil SN, nicht mehr einfache multiplexartige Zusammenfassungen der einzelnen teilnehmerindividuellen Datenströme erfolgen. Andererseits kann hier nur ein geringer Anteil an aktiven und intelligenten Einrichtungen vorgesehen werden, schon weil in diesem Bereich nicht mehr alle Einrichtungen in festen Gebäuden liegen und auch nicht mit eigener Stromversorgung versehen sein können. Die Erfindung sieht deshalb vor, im ersten Teil des Vorfelds, dem Bedienteil SN, ein aktives Verteilnetz zu bilden, in dem einfache Vermittlungsaufgaben - bei Paketvermittlung als Routingaufgaben bezeichnet - erfolgen, während die Teilnehmerverwaltung, insbesondere die Berechtigungsüberprüfung, in der Teilnehmervermittlungsstelle, dem "Edge Router" ER erfolgt. Im Gegensatz zu herkömmlichen Netzen erfolgt damit die Teilnehmerverwaltung nicht mehr im teilnehmernächsten Vermittlungsknoten, dem "Access Point" als Vorfeldeinrichtung AP.

In gewisser Weise mit der Berechtigungsüberprüfung verknüpft ist die Frage der Qualitätssicherung bei laufenden Verbindungen, auch unter dem Stichwort "Quality of Service, QoS" bekannt. Hier wird nicht für eine einzelne Verbindung die Berechtigung überprüft, sondern für jeden einzelnen Teil davon, also für jedes einzelne Datenpaket. Dies ist eine Aufgabe, die zwingend ohne laufenden Zugriff auf irgendwelche Teilnehmerdaten auskommen muß und deshalb von der oben genannten Berechtigungsüberprüfung abgetrennt und darum auch in der Vorfeldeinrichtung im teilnehmernächsten Vermittlungsknoten durchgeführt werden kann.

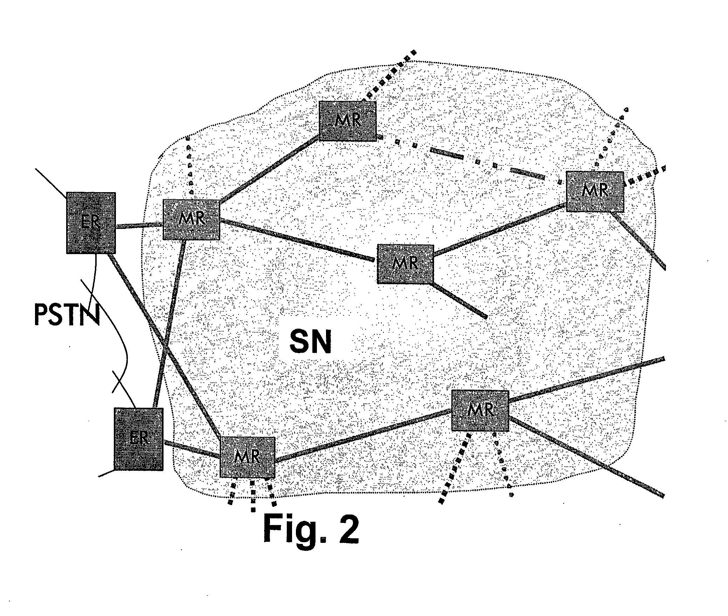

Figur 2 zeigt ein Beispiel eines Bedienteils SN, in dem beispielhaft besonders die variablen Kapazitätserfordernisse der einzelnen Teilnehmer berücksichtigt sind. Die Vorfeldeinrichtungen sind hier im Gegensatz zu den "Edge Routers" als "Micro Router" MR bezeichnet. Sie sind, um variablen Verkehr zu führen, zumindest teilweise untereinander vermascht, um Ungleichlasten auszugleichen, wenngleich eine ausreichend große Anzahl direkter Verbindungen zur Teilnehmervermittlungsstelle mit je für sich sehr großer Kapazität, beispielsweise Glasfasern, ein vergleichbares Ergebnis liefern würde. Das Gleiche könnte auch mit einer Baumstruktur, ob mit oder ohne erfindungsgemäße Vorfeldeinrichtungen AP, hier MR, erreicht werden. Außerdem ist dieses Vorfeld nicht nur an eine einzige Teilnehmervermittlungsstelle ER angeschlossen, sondern an im Beispiel deren zwei. Natürlich muß dann jede der beiden Teilnehmervermittlungsstellen ER in der Lage sein, für alle an diesem Vorfeld angeschlossenen Teilnehmer die Teilnehmerverwaltung durchzuführen. Der hierfür erforderliche Zugriff auf gemeinsame Verwaltungsmittel ist jedoch problemlos möglich.

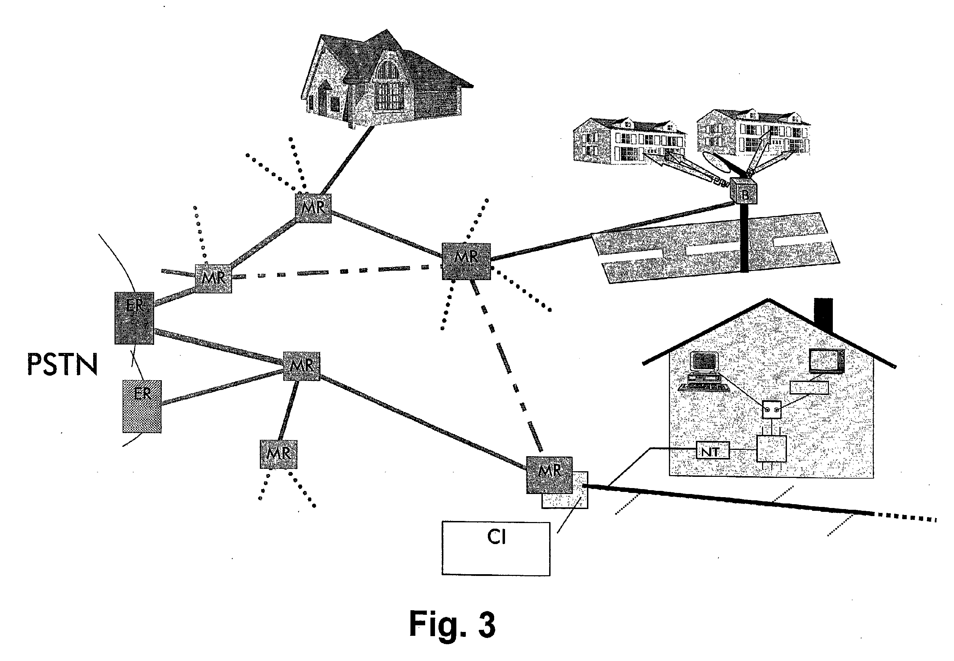

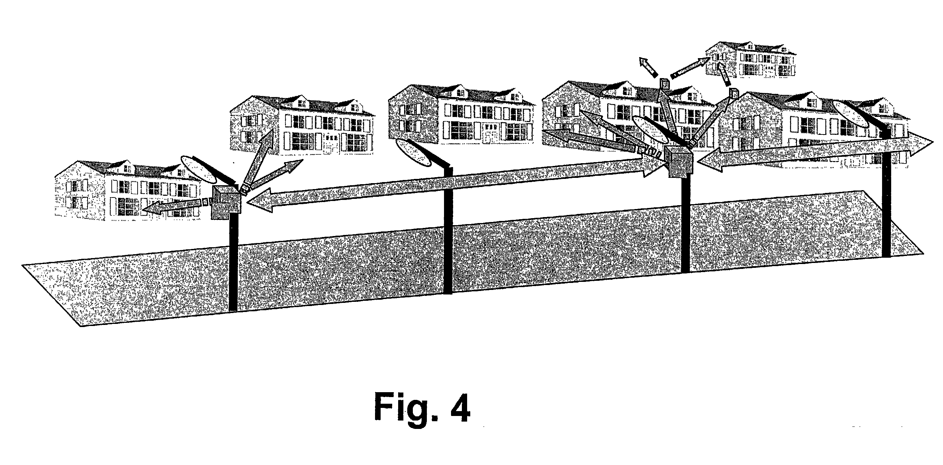

Figur 3 zeigt, ebenso wie Figur 4, einen anderen Aspekt der Erfindung auf, nämlich die Vielfalt der hier einsetzbaren Netzelemente. Im Bedienteil zwischen der Teilnehmermittlungsstelle, hier ER, und den Vorfeldeinrichtungen, hier MR, und auch zwischen den Vorfeldeinrichtungen untereinander kommen hauptsächlich Glasfaserstrecken als mehreren Teilnehmern gemeinsames Medium in Frage. Aber auch Funk- oder Koaxialkabelverbindungen sind nicht grundsätzlich ausgeschlossen. Auch die hier angewandten Normen (Hochgeschwindigkeits-LAN, Ethernet, PCM30/32) spielen keine prinzipielle Rolle.

Im Zugangsteil ist hier unter anderem, in Figur 3 rechts unten dargestellt, ein breitbandiger Anschluß über Koaxialkabel angedacht. Auf der Seite der Vorfeldeinrichtung MR ist hier ein Koaxialkabel-Interface CI, auf der Seite des Teilnehmers ein Netzabschlußgerät ("Network Termination") NT vorgesehen. Beim Teilnehmer selbst sind ein Verteiler, eine Anschlußsteckdose, ein PC und ein über eine Anschlußschaltung angeschlossenes Fernsehgerät eingezeichnet. Solche Anschlußschaltungen für Fernsehgeräte werden heute üblicherweise als "Set-Top-Boxen" bezeichnet.

Das Beispiel in Figur 3 rechts oben zeigt einen Anschluß über eine Basisstation B, die selbst nochmals mit einer Vorfeldeinrichtung, einem Micro Router, ausgerüstet sein kann. Als Medien für den Anschluß der Teilnehmer an diese Basisstation kommen feste Funkstrecken, unter Umständen auch optische Verbindungen, beides als "Fixed Wireless" bezeichnet, in Frage.

Das Beispiel oben in der Mitte von Figur 3 zeigt einen Anschluß eines Einzelteilnehmers über heute schon als herkömmlich zu bezeichnende Anschlußarten wie Kupferdoppelader oder Glasfaser. Die Kupferdoppelader, eine sogenannte Twisted-Pair-Leitung, wird beispielsweise in einer der XDSL-Betriebsarten betrieben. DSL steht dabei für "Digital Subscriber Line", das X für eine von verschiedenen bekannten Varianten. Bei Verwendung einer Glasfaser kommt eine FTTH-Technologie zur Anwendung (FTTH = Fibre to the Home).

Figur 4 zeigt weitere Varianten am Übergang vom Bedienteil zum Zugangsteil und innerhalb des Zugangsteils. Hier sind längs einer Straße an einzelnen Beleuchtungsmasten Basisstationen mit Micro Routern angebracht, die untereinander längs der Straße über freie optische Verbindungsstrecken, sogenannte Free Space Optics, miteinander verbunden sind. Die Verbindung zur Teilnehmervermittlungsstelle ist hier nicht eingezeichnet. Die Verbindung zu den Teilnehmern selbst erfolgt über Strecken mit optischer Sicht entweder über Funk im Bereich von etwa 40 ... 60 GHz oder wiederum über Lichtstrahlen. Einzelne Gegenstationen können ausschließlich oder zusätzlich als Relais dienen, so daß manche Teilnehmer nur über Relais erreichbar sind. Auf diesen kurzen Strecken kann jeweils eine einfache und preiswerte Technologie angewendet werden. Als Modulationsarten kommen etwa FSK oder DQPSK in Frage. Wegen der geringen erforderlichen Leistung genügen billige Leistungsverstärker; für die Stromversorgung kann die der Straßenbeleuchtung mitverwendet werden, indem bei Nacht Akkus entsprechender Kapazität aufgeladen werden. Damit sind auch die entsprechenden Kosten für die Installation recht gering.

Selbstverständlich müssen auch die Steuerungs- und Signalisierungsmittel in den oben beschriebenen Netzelementen an die beschriebene Funktionsweise angepaßt werden. Dies ist aber, sobald diese verstanden ist, mit den bekannten Mitteln möglich. Auch die erforderlichen Programme und Programmodule können dann leicht erstellt werden. Für die nun auch im Vorfeld erforderliche Wegewahl können grundsätzlich die bekannten Prinzipien für die Wegewahl verwendet werden.

## Patentansprüche

1. Verfahren zum Aufbau von Telekommunikationsverbindungen, insbesondere von paketvermittelten Telekommunikationsverbindungen, im Anschlußbereich (SN, LM) einer Teilnehmervermittlungsstelle (ER) mit folgenden Schritten:
- Entgegennahme eines Wunsches zum Aufbau einer Telekommunikationsverbindung von oder mit einem Endteilnehmer (TE) durch die Teilnehmervermittlungsstelle (ER),
- Prüfung durch die Teilnehmervermittlungsstelle (ER), ob dieser Endteilnehmer (TE) zum Aufbau der gewünschten Telekommunikationsverbindung berechtigt ist,
- Aufbau eines verbindungsindividuellen Kanals als Teil eines mehreren Teilnehmern gemeinsamen Mediums zwischen der Teilnehmervermittlungsstelle (ER) und einer Vorfeldeinrichtung (AP, MR),
- Signalisierung des Wunsches zum Aufbau der Telekommunikationsverbindung durch die Teilnehmervermittlungsstelle (ER) an die Vorfeldeinrichtung (AP, MR),
- Entgegennahme der Signalisierung durch die Vorfeldeinrichtung (AP, MR),
- Verbinden eines teilnehmerindividuellen Pfads von der Vorfeldeinrichtung (AP, MR) zum Endteilnehmer (TE) mit dem verbindungsindividuell aufgebauten Kanal, der Teil eines mehreren Teilnehmern gemeinsamen Mediums zwischen der Teilnehmervermittlungsstelle (ER) und der Vorfeldeinrichtung (AP, MR) ist, durch die Vorfeldeinrichtung (AP, MR), und
- Aufnahme der gewünschten Telekommunikationsverbindung.

2. Teilnehmeranschlußsystem im Anschlußbereich (SN, LM) einer Teilnehmervermittlungsstelle (ER) mit
- Ersten Steuerungsmitteln in der Teilnehmervermittlungsstelle (ER) zur Entgegennahme eines Wunsches zum Aufbau einer Telekommunikationsverbindung von oder mit einem Endteilnehmer (TE) durch die Teilnehmervermittlungsstelle (ER),
- Zweiten Steuerungsmitteln in der Teilnehmervermittlungsstelle (ER) zur Prüfung, ob dieser Endteilnehmer (TE) zum Aufbau der gewünschten Telekommunikationsverbindung berechtigt ist,
- Ersten Koppelmitteln zum Aufbau eines verbindungsindividuell ausgewählten Kanals als Teil eines mehreren Teilnehmern gemeinsamen Mediums zwischen der Teilnehmervermittlungsstelle (ER) und einer Vorfeldeinrichtung (AP, MR),
- Ersten Signalisierungsmitteln zur Signalisierung des Wunsches zum Aufbau der Telekommunikationsverbindung durch die Teilnehmervermittlungsstelle (ER) an die Vorfeldeinrichtung (AP, MR),
- Zweiten Signalisierungsmitteln zur Entgegennahme der Signalisierung durch die Vorfeldeinrichtung (AP, MR), und
- Zweiten Koppelmitteln zum Verbinden eines teilnehmerindividuellen Pfads von der Vorfeldeinrichtung (AP, MR) zum Endteilnehmer (TE) mit dem verbindungsindividuell aufgebauten Kanal, der Teil eines mehreren Teilnehmern gemeinsamen Mediums zwischen der Teilnehmervermittlungsstelle (ER) und der Vorfeldeinrichtung (AP, MR) ist, durch die Vorfeldeinrichtung (AP, MR).

3. Teilnehmervermittlungsstelle (ER) mit
- Ersten Steuerungsmitteln zur Entgegennahme eines Wunsches zum Aufbau einer Telekommunikationsverbindung von oder mit einem Endteilnehmer (TE),
- Zweiten Steuerungsmitteln zur Prüfung, ob dieser Endteilnehmer (TE) zum Aufbau der gewünschten Telekommunikationsverbindung berechtigt ist,
- Ersten Koppelmitteln zum Aufbau eines verbindungsindividuellen Kanals als Teil eines mehreren Teilnehmern gemeinsamen Mediums zwischen der Teilnehmervermittlungsstelle (ER) und der Vorfeldeinrichtung (AP, MR), und
- Ersten Signalisierungsmitteln zur Signalisierung des Wunsches zum Aufbau der Telekommunikationsverbindung durch die Teilnehmervermittlungsstelle (ER) an eine Vorfeldeinrichtung (AP, MR).

4. Vorfeldeinrichtung (AP, MR) mit
- Zweiten Signalisierungsmitteln zur Entgegennahme der Signalisierung eines Wunsches zum Aufbau einer Telekommunikationsverbindung von oder mit einem Endteilnehmer (TE), und
- Zweiten Koppelmitteln zum Verbinden eines teilnehmerindividuellen Pfads von der Vorfeldeinrichtung (AP, MR) zum Endteilnehmer (TE) mit einem verbindungsindividuell aufgebauten Kanal, der Teil eines mehreren Teilnehmern gemeinsamen Mediums zwischen einer Teilnehmervermittlungsstelle (ER) und der Vorfeldeinrichtung (AP, MR) ist.

5. Verfahren nach Anspruch 1, **dadurch gekennzeichnet, daß** im Zuge des Aufbaus des verbindungsindividuellen Kanals zunächst geprüft wird, zu diesem Endteilnehmer (TE) hin eine Wegewahl möglich ist, und daß bei gegebener Wegewahlmöglichkeit zunächst einer der möglichen Wege ausgewählt wird.

6. Teilnehmeranschlußsystem nach Anspruch 2, **dadurch gekennzeichnet, daß** Dritte Steuerungsmittel in der Teilnehmervermittlungsstelle (ER) vorhanden sind zur Prüfung, ob zu diesem Endteilnehmer (TE) hin eine Wegewahl möglich ist und zur Auswahl eines der möglichen Wege bei gegebener Wegewahlmöglichkeit.

7. Teilnehmervermittlungsstelle (ER) nach Anspruch 3, **dadurch gekennzeichnet, daß** sie Dritte Steuerungsmittel aufweist zur Prüfung, ob zu diesem Endteilnehmer (TE) hin eine Wegewahl möglich ist und zur Auswahl eines der möglichen Wege bei gegebener Wegewahlmöglichkeit.

8. Programmodul zur Durchführung eines Verfahrens zum Aufbau von Telekommunikationsverbindungen, insbesondere von paketvermittelten Telekommunikationsverbindungen, im Anschlußbereich (SN, LM) einer Teilnehmervermittlungsstelle (ER) mit Programmelementen zur Steuerung der folgenden Schritte:
- Entgegennahme eines Wunsches zum Aufbau einer Telekommunikationsverbindung von oder mit einem Endteilnehmer (TE) durch die Teilnehmervermittlungsstelle (ER),
- Prüfung durch die Teilnehmervermittlungsstelle (ER), ob dieser Endteilnehmer (TE) zum Aufbau der gewünschten Telekommunikationsverbindung berechtigt ist,
- Aufbau eines verbindungsindividuellen Kanals als Teil eines mehreren Teilnehmern gemeinsamen Mediums zwischen der Teilnehmervermittlungsstelle (ER) und einer Vorfeldeinrichtung (AP, MR),
- Signalisierung des Wunsches zum Aufbau der Telekommunikationsverbindung durch die Teilnehmervermittlungsstelle (ER) an die Vorfeldeinrichtung (AP, MR),
- Entgegennahme der Signalisierung durch die Vorfeldeinrichtung (AP, MR),
- Verbinden eines teilnehmerindividuellen Pfads von der Vorfeldeinrichtung (AP, MR) zum Endteilnehmer (TE) mit dem verbindungsindividuell aufgebauten Kanal, der Teil eines mehreren Teilnehmern gemeinsamen Mediums zwischen der Teilnehmervermittlungsstelle (ER) und der Vorfeldeinrichtung (AP, MR) ist, durch die Vorfeldeinrichtung (AP, MR), und
- Aufnahme der gewünschten Telekommunikationsverbindung.
